# EUROPEAN PATENT APPLICATION

(11) **EP 1 403 178 A1**
(43) Date of publication of application: **31.03.2004**
(21) Application number: 03254367.0
(22) Date of filing: 10.07.2003
(51) Int. Cl.: B62M 3/08

(54) **Pedal systems**

(30) Priority: 10.07.2002 GB 0215952
(71) Applicant: Butterworth, Paul John, Chard, Somerset TA20 1DS (GB)
(72) Inventor: Butterworth, Paul John, Chard, Somerset TA20 1DS (GB)
(74) Representative: Brown, Michael Stanley

(57) **Abstract**

A pedal system for, for example, an exercise bike, comprises a primary crank arm arranged for rotation about a primary axis, and a pedal rotatably mounted on the crank arm with the axis of rotation of the pedal relative to the crank arm inclined obliquely relative to the primary axis.

## Description

### Field of the Invention

This invention relates to pedal systems and is concerned with the provision of a pedal system for, for example, an exercise bike, that allows for complex rotation of the knee, hip and ankle of the user.

Such a system can be used for therapy as a mobilising device or for retraining and strengthening specific muscle groups on either one side of the user or on both sides.

### Summary of the Invention

According to the present invention there is provided a pedal system comprising a crank arm arranged for rotation about a primary axis, and a pedal rotatably mounted on the crank arm,
characterised in that the axis of rotation of the pedal relative to the crank arm is inclined obliquely relative to the primary axis.

The means for mounting the pedal on the crank arm may comprise a wedge having a first surface that abuts a surface of the crank arm and a second surface, inclined to the first surface, that includes means for mounting the pedal shaft.

Means may be provided for adjusting the inclination of the second surface relative to the first surface.

The wedge preferably has a third surface, inclined at a different angle to the first surface as compared to the second surface, and the third surface preferably also includes means for mounting the pedal shaft.

Means may be provided for mounting the wedge on the crank arm at a plurality of positions along the length of the crank arm.

Means may alternatively be provided for adjusting the position along the length of the crank arm at which the wedge is mounted on the crank arm.

A block formed with a bore to receive the pedal spindle may be secured to either the second or third surface of the wedge.

A secondary crank arm may alternatively be secured to either the second or third surface of the wedge.

### Brief Description of the Drawings

Figure 1 shows a first form of pedal system,
Figure 2 is a view of the pedal system of Figure 1 at right angles to the view of Figure 1,
Figure 3 is a view similar to Figure 1 but showing the pedal mounted on the crank arm at a different position,
Figure 4 is a view of the pedal system of Figure 3 at right angles to the view of Figure 3,
Figure 5 shows a second form of pedal system,
Figure 6 is a view of the pedal system of Figure 5 at right angles to the view of Figure 5,
Figures 7 and 8 are views corresponding to Figures 5 and 6, but showing the pedal mounted on the crank arm at a different position,
Figure 9 shows a double pedal system comprising two pedal systems as shown in Figure 3,
Figure 10 shows a pedal system that includes an adjustable wedge, and
Figure 11 shows a further form of pedal system.

### Description of the Preferred Embodiments

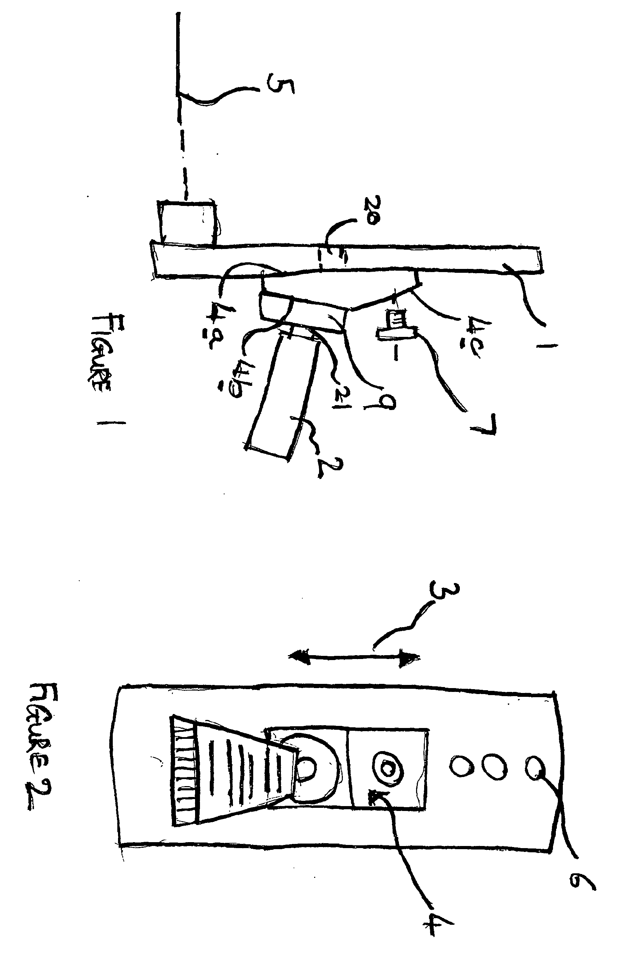

Figures 1 to 4 show a first embodiment of the invention that includes a primary crank arm 1 arranged for rotation about a primary axis 5 and formed with a row of apertures 6. A wedge 4 is secured to the primary crank arm 1 and the wedge 4 has a first surface 4a that abuts the presented surface of the crank arm 1. A stud 20 projects from the first surface 4a of the wedge 4 and fits in one of the apertures 6. The wedge 4 also has second and third surfaces 4b and 4c that are inclined relative to the first surface 4a. The wedge 4 is secured to the crank arm 1 by means of a fixing bolt 7 that passes through a bore in the wedge 4 and has threaded engagement in another of the apertures 6. A pedal arrangement comprising a block 9, a spindle 21 and a pedal 2 is secured to the wedge 4.

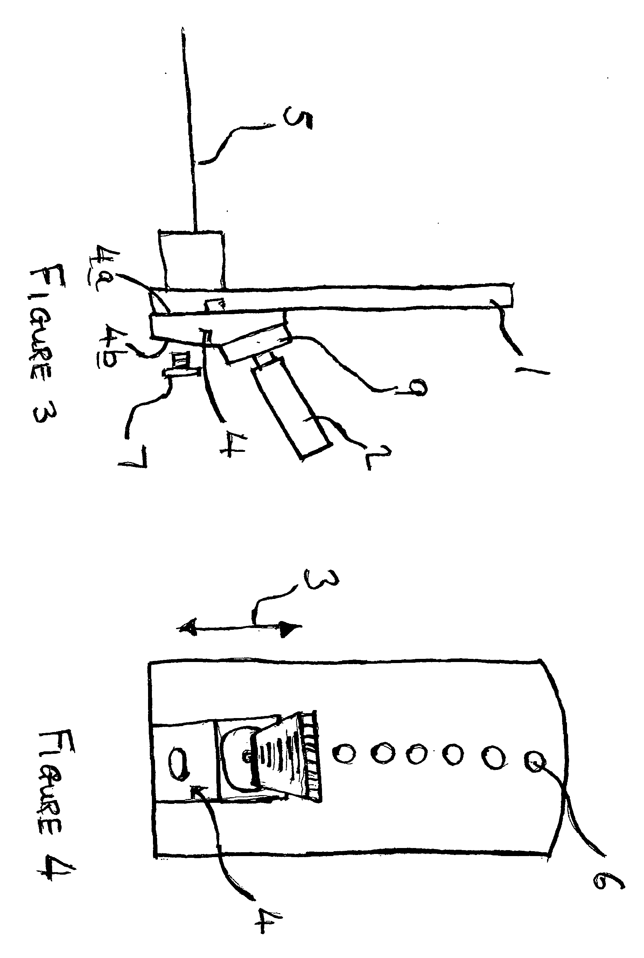

As shown in Figures 1 and 2, the pedal arrangement 9, 21, 2 is secured to the wedge 4 with the block 9 in contact with the second surface 4b of the wedge and with the axis of the spindle 21 inclined downwardly relative to the wedge 4. The pedal 2 rotates about the axis of the spindle 9, i.e. about an axis that is inclined obliquely relative to the primary axis 5.

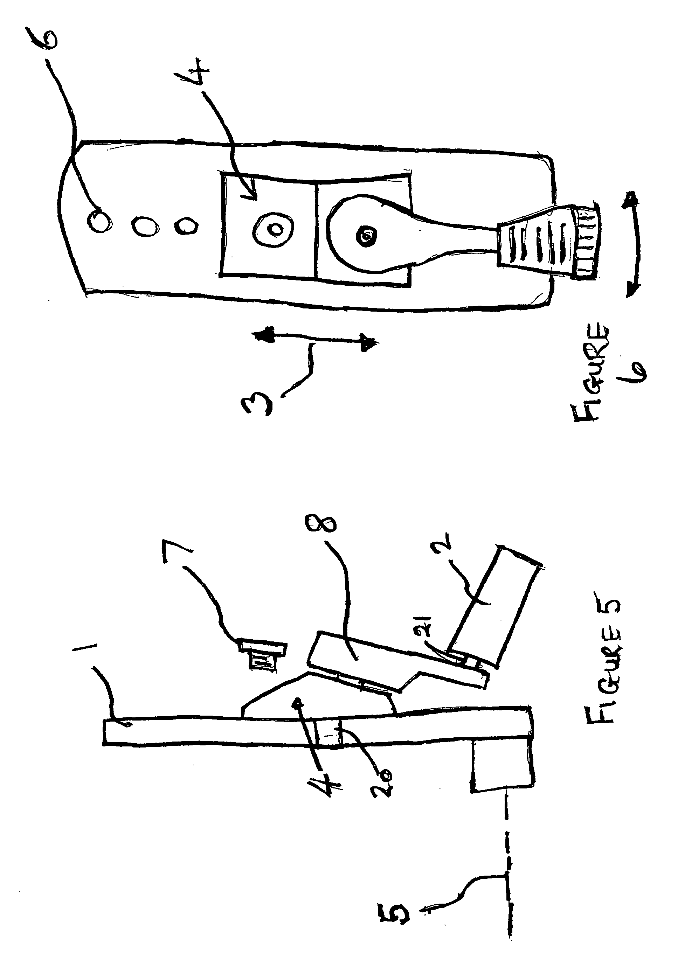

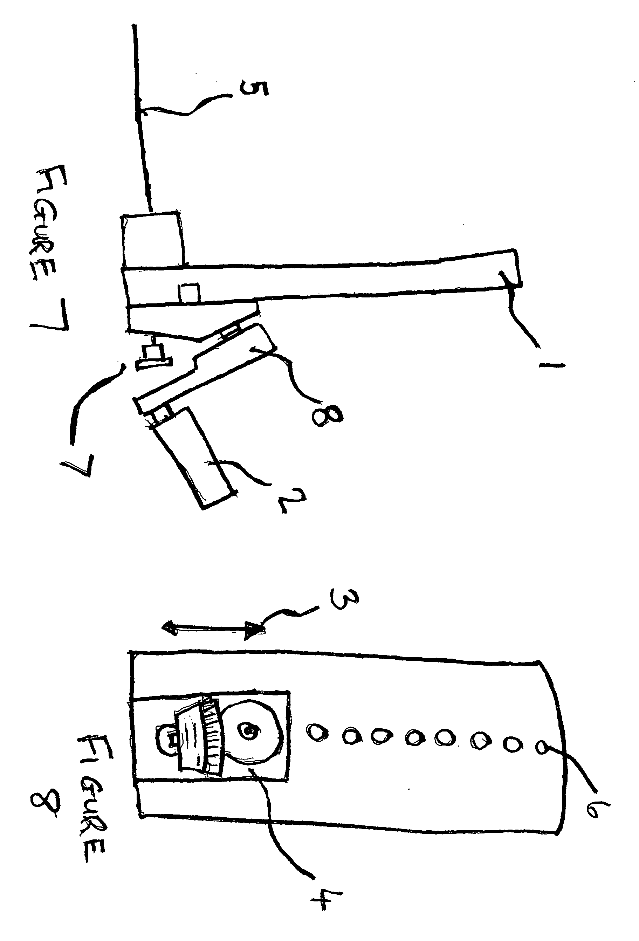

As shown in Figures 3 and 4, the pedal arrangement 9, 21, 2 is secured to the wedge 4 with the block 9 in contact with the second surface 4c of the wedge 4 and with the axis of the spindle 21 inclined upwardly relative to the wedge 4. The pedal 2 rotates about the axis of the spindle 9, i.e. about an axis that is again inclined obliquely relative to the primary axis 5.

The position at which the wedge 4 and thus the pedal arrangement are mounted on the crank arm 1 can be adjusted in the direction of the arrow 3 in Figures 2 and 4 by appropriate selection of the aperture 6 into which the stud 20 is fitted.

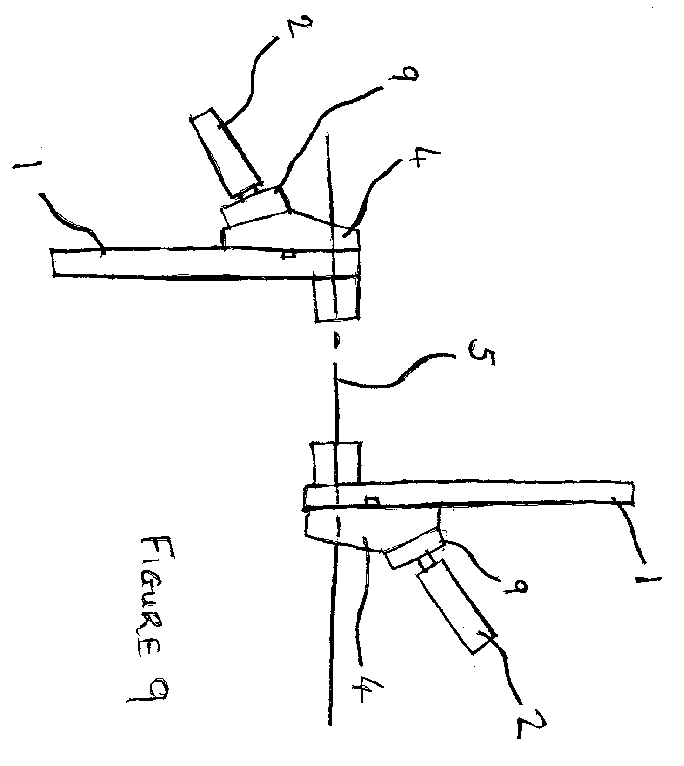

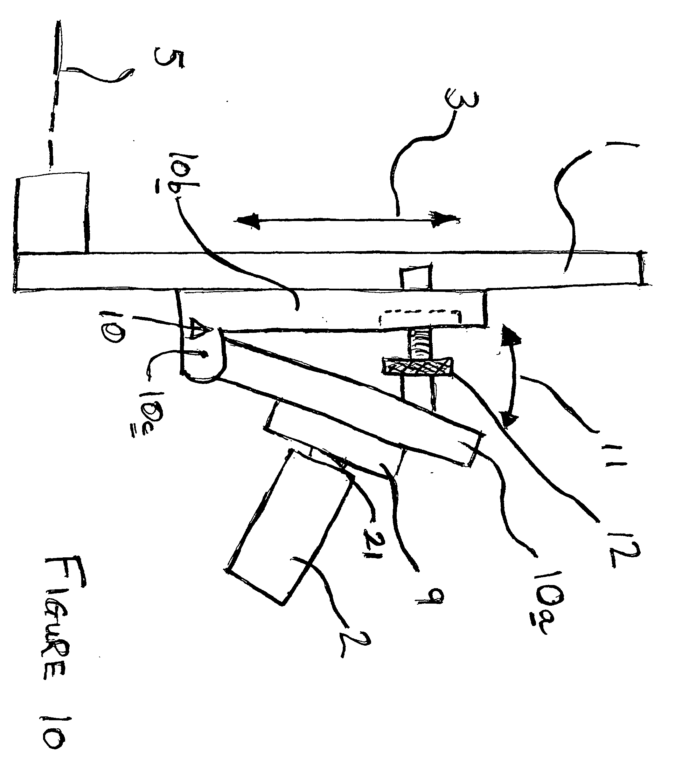

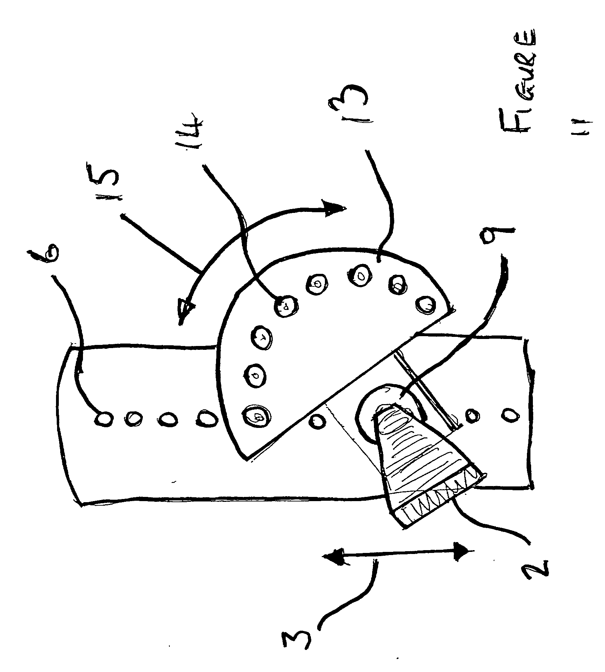

Figures 5 to 8 of the drawings show a second embodiment of the invention and this differs from the embodiment shown in Figures 1 to 4 in that the block 9 is replaced by a secondary crank 8 that is rotatable relative to the wedge 4 about an axis that is inclined obliquely relative to the primary axis 5. The pedal 2 is rotatably mounted on the spindle 21 and the provision of the secondary crank 8 provides a further range of movements in addition to those provided by the embodiment shown in Figures 1 to 4. It will be appreciated that the pedal arrangement of Figures 1 to 4 can readily be replaced by the pedal arrangement of Figures 5 to 8. The wedge 4 can be mounted at a desired position along the length of the crank arm 1 by appropriate selection of the aperture 6 into which the stud 20 is to be fitted.

As an alternative to providing the crank arm 1 with a row of fixing apertures 6, a T-slot and nut arrangement (not shown) may be provided for effecting adjustment of the position of the wedge 4 along the length of the primary crank 1.

An exercise bike can be provided with two opposing crank arms 1 with the pedal arrangements set in the orientation shown in Figure 9, i.e. corresponding to that shown in Figure 3.

The embodiments shown in Figures 1 to 9 include wedges 4 that are of a fixed configuration. The embodiment shown in Figure 10, however, includes a wedge 10 having a configuration that is adjustable in configuration. The wedge 10 includes a first wedge element 10a, to which the pedal block 9 is secured, and a second wedge element 10b, which is secured to the primary crank arm 1. The two wedge elements 10a and 10b are pivotally connected at 10c and the relative inclination of the two elements 10a and 10b can be adjusted, as indicated by the arrow 11, by means of a screw arrangement 12 acting between the two wedge elements 10a and 10b. The axis of the pedal spindle 21 thus extends at an adjustable oblique angle relative to the primary axis 5.

In addition to having a facility for adjusting the angle between the two wedge elements 10a and 10b, the embodiment shown in Figure 10 also includes a facility for adjusting the position along the length of the primary crank arm 1 at which the wedge 10 is connected to the primary crank arm 1, again as indicated by the arrow 3 in Figure 10. The radius of the circular path of movement of the foot of the user in contact with the pedal 2 can thus be adjusted.

Figure 11 shows an alternative form of wedge 13 which is formed with an arcuate array of fixing apertures 14 so that the adjustably oblique angle of the pedal spindle can be orientated in varying positions, as indicated by the arrow 15, thereby permitting further variation of the muscle exercises that can be provided.

## Claims

1. A pedal system comprising a crank arm arranged for rotation about a primary axis, and a pedal rotatably mounted on the crank arm, **characterised in that** the axis of rotation of the pedal relative to the crank arm is inclined obliquely relative to the primary axis.

2. A pedal system as claimed in Claim 1, **characterised in that** the means for mounting the pedal on the crank arm comprises a wedge having a first surface that abuts a surface of the crank arm and a second surface, inclined to the first surface, that includes means for mounting the pedal spindle.

3. A pedal system as claimed in Claim 2, **characterised in that** means are provided for adjusting the inclination of the second surface relative to the first surface.

4. A pedal system as claimed in Claim 2, **characterised in that** the wedge has a third surface, inclined at a different angle to the first surface as compared to the second surface, and the third surface also includes means for mounting the pedal spindle.

5. A pedal system as claimed in any one of the preceding claims, **characterised in that** means are provided for mounting the wedge on the crank arm at a plurality of positions along the length of the crank arm.

6. A pedal system as claimed in any one of Claims 1 to 4, **characterised in that** means are provided for adjusting the position along the length of the crank arm at which the wedge is mounted on the crank arm.

7. A pedal system as claimed in Claim 4, **characterised in that** a block formed with a bore to receive the pedal spindle is secured to either the second or third surface of the wedge.

8. A pedal system as claimed in Claim 4, **characterised in that** a secondary crank arm is secured to either the second or third surface of the wedge.
